# FASCICULE DE BREVET EUROPEEN

(11) **EP 1 950 391 B1**
(45) Date de publication et mention de la délivrance du brevet: **10.03.2010**
(21) Numéro de dépôt: 08150318.7
(22) Date de dépôt: 16.01.2008
(51) Int. Cl.: F02C 6/18, F22B 33/00

(54) **Procédé d'optimisation énergétique d'un site de production d'énergie et de vapeur d'eau**
Verfahren zur Energieoptimierung eines Wärmekraftwerks zur Energieerzeugung und Dampferzeugung
Energy optimisation process of a power plant for both energy and steam production

(30) Priorité: 25.01.2007 FR 0752874
(43) Date de publication de la demande: 30.07.2008
(73) Titulaire: L'AIR LIQUIDE, Société Anonyme pour l'Etude et l'Exploitation des Procédés Georges Claude, 75007 Paris (FR)
(72) Inventeur: POLINE, Tanguy, 94370, SUCY EN BRIE (FR)
(74) Mandataire: Conan, Philippe Claude

(56) Documents cités:
- GB-A- 899 904
- US-A- 2 471 755
- US-A- 3 118 429
- US-A- 4 462 206
- US-A1- 2006 260 290

## Description

La présente invention concerne un procédé d'optimisation énergétique d'un site de production d'énergie électrique et de chaleur.

Les grands sites industriels utilisent les commodités de base que sont, d'une part, l'énergie mécanique ou électrique et, d'autre part, la vapeur ou l'eau chaude. Sur de nombreux sites, ces commodités sont produites sur place dans des unités voisines de cogénération et de production de vapeur ou d'eau chaude.

On connaît le document US-A-3 118 429 qui décrit une unité de cogénération d'électricité et de vapeur, où les fumées d'une turbine à gaz sont utilisées comme comburant dans une chaudière à vapeur, après avoir été ajustées en température par échange de chaleur avec de la vapeur produite par ladite chaudière.

En outre, le document US-A-2 471 755 décrit une unité de production d'électricité comportant une ou deux chaudière(s) produisant de la vapeur convertie en énergie électrique et de l'air chaud sous pression. L'air est comprimé, puis chauffé au sein de la chaudière par échange de chaleur avec les fumées et détendu dans une ou plusieurs turbines permettant d'entraîner le compresseur d'air et de produire de l'électricité. L'air ainsi détendu sert d'une part à préchauffer l'eau d'alimentation de la chaudière à vapeur et d'autre part à alimenter la ou les chaudières en comburant.

Le brevet GB 899 904 A décrit une unité de production d'électricité dans laquelle l'air d'alimentation de la turbine à gaz est préchauffé par échange de chaleur avec de la vapeur soutirée de turbines à vapeur étagées.

Le brevet US-A-4 462 206 décrit quant à lui une unité de production d'électricité à partir d'une turbine à gaz dont la chambre de combustion prévoit l'introduction du combustible sous la forme d'un lit fluidisé et le dépoussiérage des fumées avant leur introduction dans la turbine. L'unité comporte une chaudière de récupération. De l'eau chaude à haute pression en provenance de cette chaudière de récupération circule dans la chambre de combustion de la turbine à gaz.

Un but de la présente invention est de proposer l'intégration d'un train de cogénération avec chaudière de récupération de chaleur et d'une unité de production de vapeur voisine de manière à optimiser le rendement énergétique global des deux unités.

Dans ce but, l'invention concerne un procédé de production d'énergie, de chaleur et de vapeur d'eau mettant en oeuvre :
- une **unité de cogénération** (A) comprenant une turbine à gaz (1) et une unité de récupération de chaleur (5),
- une **unité de production de vapeur** (B),
comportant les étapes suivantes :
- la production d'énergie (3) et de gaz de combustion (4) par la turbine a gaz (1),
- l'alimentation en eau (6) de l'unité de récupération de chaleur (5),
- le chauffage de ladite eau (6) par les gaz de combustion (4) de la turbine à gaz (1) dans l'unité de récupération de chaleur (5),
- le chauffage d'eau (12) par combustion d'un combustible (11) et d'air (10) dans l'unité de production de vapeur (B),
et **caractérisé en ce qu**'il comporte un préchauffage dudit air (10) réalisé au moins en partie par échange de chaleur avec ladite eau (6).

L'invention concerne donc un procédé mis en oeuvre sur un site industriel comprenant à la fois une unité de cogénération et une unité de production de vapeur.

L'unité de cogénération comprend une turbine à gaz produisant de l'énergie mécanique ou électrique par détente de gaz de combustion. La chaleur de ces gaz de combustion est récupérée dans une unité de récupération de chaleur destinée à produire de la vapeur d'eau ou de l'eau chaude. Cette unité de récupération de chaleur est généralement une chaudière dans laquelle la chaleur des gaz de combustion de la turbine à gaz chauffe l'eau introduite dans la chaudière. Les gaz de combustion de la turbine peuvent également être utilisés comme comburant s'ils contiennent encore de l'oxygène et si un combustible est introduit dans l'unité de récupération de chaleur ; on parle alors de post-combustion. Généralement, l'unité de récupération de chaleur est alimentée par une eau déjà chaude ; par "eau chaude", on entend une eau présentant une température d'au moins 105°C.

L'unité de production de vapeur est habituellement une chaudière dans laquelle un combustible est brûlé en présence d'air pour dégager de la chaleur. Cette chaleur chauffe de l'eau jusqu'à obtenir de la vapeur.

Selon l'invention, l'air introduit dans la chaudière de l'unité de production de vapeur est chauffé préalablement à son introduction dans la chaudière par échange de chaleur avec l'eau destinée à alimenter l'unité de récupération de chaleur de l'unité de cogénération. De préférence, la température de l'eau de l'unité de récupération de chaleur de l'unité de cogénération est supérieure d'au moins 20°C, encore plus préférentiellement d'au moins 30°C, voire d'au moins 50°C, à celle de l'air de l'unité de production de vapeur à préchauffer.

L'invention peut être mise en oeuvre avec les préférences suivantes :
- l'eau qui alimente l'unité de récupération de chaleur est chauffée par de la vapeur d'eau.
- l'eau qui alimente l'unité de récupération de chaleur est chauffée par de la vapeur d'eau dérivée de la vapeur produite par l'unité de production de vapeur et/ou par l'unité de récupération de chaleur de l'unité de cogénération, avantageusement par de la vapeur de basse pression produite par ces unités.
- l'eau qui alimente l'unité de récupération de chaleur est chauffée par de la vapeur d'eau au moyen d'un dégazeur,
- l'eau qui alimente l'unité de récupération de chaleur est chauffée au moyen d'un dégazeur par de la vapeur d'eau dérivée de l'unité de production de vapeur d'eau et/ou de l'unité de récupération de chaleur de l'unité de cogénération. Le dégazeur permet de mettre en contact l'eau à préchauffer avec de la vapeur d'eau de manière à préchauffer l'eau et simultanément éliminer l'oxygène dissous dans cette eau.
- l'air introduit dans l'unité de production de vapeur est également chauffé en partie par échange de chaleur avec de la vapeur d'eau produite par ladite unité de production de vapeur et/ou par l'unité de récupération de chaleur de l'unité de cogénération. De préférence, l'air est chauffé au moyen de vapeur de basse ou moyenne pression. Il est également préférable que ce chauffage de l'air qui alimente la chaudière de l'unité de production de vapeur par de la vapeur soit réalisé après que l'air de l'unité de production de vapeur ait été préchauffé par échange de chaleur avec l'eau qui alimente l'unité de récupération de chaleur de l'unité de cogénération.

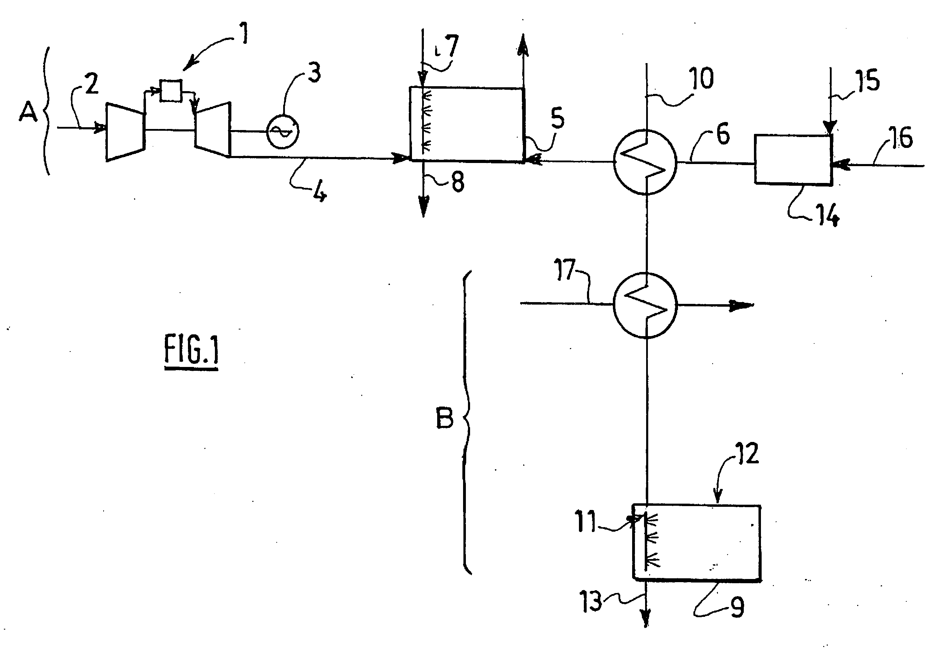

L'invention est illustrée par la figure 1. Le site industriel illustré comprend une unité de cogénération A et une unité de production de vapeur B. Dans l'unité de cogénération A, la turbine à gaz 1 est alimentée par un combustible 2. Elle produit de l'énergie mécanique ou électrique 3 et des fumées de combustion chaudes 4. Ces fumées de combustion 4 sont introduites dans une unité de récupération de chaleur 5 pour valoriser leurs calories. L'unité de récupération de chaleur 5 est alimentée par de l'eau 6, cette eau est chauffée par combustion d'un combustible 7 et de l'oxygène restant dans les fumées de combustion 4. Cette unité de récupération de chaleur 5 produit de la vapeur 8. L'eau 6 est obtenue par chauffage d'eau froide 16 dans un dégazeur 14 alimenté en vapeur d'eau 15. L'unité de production de vapeur B comprend une chaudière 9 pour chauffer de l'eau 12 par combustion d'un combustible 11 avec de l'air 10. La chaudière 9 produit de la vapeur 13. L'air 10 est préalablement chauffé par échange de chaleur avec l'eau 6 de l'unité de récupération de chaleur 5, puis par échange de chaleur avec de la vapeur d'eau 17.

Les vapeurs d'eau 15 et 17 utilisées pour le chauffage de l'eau 16 de l'unité de récupération de chaleur 5 et de l'air 10 de la chaudière sont de préférence des vapeurs de basse ou moyenne pression dérivées des vapeurs haute pression 8 et 13 produites par l'unité de récupération de chaleur 5 et par la chaudière 9.

Le procédé selon l'invention permet de réduire la consommation de vapeur d'eau nécessaire au chauffage de l'air de la chaudière de production de vapeur en récupérant la chaleur de l'eau destinée à alimenter l'unité de récupération de chaleur. Simultanément, il n'a été observé qu'une très légère baisse de production de vapeur par l'unité de récupération de chaleur. Globalement, le procédé selon l'invention a permis de faire l'économie de 10 % de la vapeur utilisée pour le procédé de l'art antérieur sans échange de chaleur entre l'air de l'unité de production de vapeur et l'eau qui alimente l'unité de récupération de chaleur de l'unité de cogénération.

L'invention a été mise en oeuvre sur un site industriel reproduisant le schéma de la figure 1. La température de l'eau destinée à être introduite dans l'unité de récupération de chaleur était de 148°C et la température de l'air destiné à être introduit dans l'unité de production de vapeur était de 10°C. Un échange de chaleur entre ces deux fluides a été mis en oeuvre de manière à amener la température de l'eau destinée à être introduite dans l'unité de récupération de chaleur à 68°C. Du fait du préchauffage de l'air destiné à être introduit dans l'unité de production de vapeur, il a été possible d'économiser 10 t/h de vapeur d'eau de 4 bar de pression pour le chauffage de cet air. En contrepartie, l'unité de récupération de chaleur de l'unité de cogénération a baissé sa production de vapeur d'eau à haute pression seulement de 69,7 t/h à 69 t/h.

## Revendications

1. Procédé de production d'énergie, de chaleur et de vapeur d'eau mettant en oeuvre :
- une **unité de cogénération** (A) comprenant une turbine à gaz (1) et une unité de récupération de chaleur (5),
- une **unité de production de vapeur** (B),
comportant :
- la production d'énergie (3) et de gaz de combustion (4) par la turbine à gaz (1),
- l'alimentation en eau (6) de l'unité de récupération de chaleur (5),
- le chauffage de ladite eau (6) par les gaz de combustion (4) de la turbine à gaz (1) dans l'unité de récupération de chaleur (5),
- le chauffage d'eau (12) par combustion d'un combustible (11) et d'air (10) dans l'unité de production de vapeur (B),
et **caractérisé en ce qu'**il comporte un préchauffage dudit air (10) réalisé au moins en partie par échange de chaleur avec l'eau (6) qui alimente l'unité de récupération de chaleur (5) de l'unité de cogénération (A).

2. Procédé selon la revendication précédente, **caractérisé en ce que** la température de l'eau (6) de l'unité de récupération de chaleur (5) de l'unité de cogénération (A) est supérieure d'au moins 20°C à celle de l'air (10) de l'unité de production de vapeur (B) à préchauffer.

3. Procédé selon la revendication 1 ou 2, **caractérisé en ce que** la température de l'eau (6) de l'unité de récupération de chaleur (5) de l'unité de cogénération (A) est supérieure d'au moins 30°C à celle de l'air (10) de l'unité de production de vapeur (B) à préchauffer.

4. Procédé selon l'une des revendications précédentes, **caractérisé en ce que** l'eau (6) qui alimente l'unité de récupération de chaleur (5) est chauffée par de la vapeur d'eau (15).

5. Procédé selon la revendication précédente, **caractérisé en ce que** l'eau (6) qui alimente l'unité de récupération de chaleur est chauffée par de la vapeur d'eau (15) dérivée de la vapeur d'eau (13, 8) produite par l'unité de production de vapeur (B) et/ou par l'unité de récupération de chaleur (5) de l'unité de cogénération (A).

6. Procédé selon la revendication 4 ou 5, **caractérisé en ce que** l'eau (6) qui alimente l'unité de récupération de chaleur (5) est chauffée au moyen d'un dégazeur (14) par de la vapeur d'eau (15).

7. Procédé selon l'une des revendications précédentes, **caractérisé en ce que** l'air (10) qui alimente la chaudière (9) de l'unité de production de vapeur (B) est chauffé en partie par échange de chaleur avec de la vapeur (17) produite par ladite unité de production de vapeur (B) et/ou par l'unité de récupération de chaleur (5) de l'unité de cogénération (A).

8. Procédé selon la revendication 7, **caractérisé en ce que** le chauffage de l'air (10) qui alimente la chaudière (9) de l'unité de production de vapeur (B) par de la vapeur est réalisé après que l'air (10) de l'unité de production de vapeur (B) a été préchauffé par échange de chaleur avec l'eau (6) qui alimente l'unité de récupération de chaleur (5) de l'unité de cogénération (A).

## Claims

1. Process for producing power, heat and steam employing:
- a **cogeneration unit** (A) comprising a gas turbine (1) and a heat recovery unit (5); and
- a **steam production unit** (B) comprising:
- the production of energy (3) and combustion gas (4) by the gas turbine,
- the feeding of the heat recovery unit (5) with water (6),
- the heating of said water (6) by the combustion gas (4) from the gas turbine (1) in the heat recovery unit (5) and
- the heating of water (12) by air (10)/fuel (11) combustion in the steam production unit (B), said process being **characterized in that** it includes preheating of said air (10) carried out at least partly by heat exchange with the water (6) that feeds the heat recovery unit (5) of the cogeneration unit (A).

2. Process according to the preceding claim, **characterized in that** the temperature of the water (6) for the heat recovery unit (5) of the cogeneration unit (A) is at least 20°C higher than that of the air (10) for the steam production unit (B) to be preheated.

3. Process according to Claim 1 or 2, **characterized in that** the temperature of the water (6) for the heat recovery unit (5) of the cogeneration unit (A) is at least 30°C higher than that of the air (10) for the steam production unit (B) to be preheated.

4. Process according to one of the preceding claims, **characterized in that** the water (6) that feeds the heat recovery unit (5) is heated by steam (15).

5. Process according to the preceding claim, **characterized in that** the water (6) that feeds the heat recovery unit is heated by steam (15) derived from the steam (13, 8) produced by the steam production unit (B) and/or by the heat recovery unit (5) of the cogeneration unit (A).

6. Process according to Claim 4 or 5, **characterized in that** the water (6) that feeds the heat recovery unit (5) is heated by means of a degasifier (14) by steam (15).

7. Process according to one of the preceding claims, **characterized in that** the air (10) that feeds the boiler (9) of the steam production unit (B) is partly heated by heat exchange with steam (17) produced by said steam production unit (B) and/or by the heat recovery unit (5) of the cogeneration unit (A).

8. Process according to Claim 7, **characterized in that** the air (10) that feeds the boiler (9) of the steam production unit (B) is heated by steam after the air (10) for the stream production unit (B) has been preheated by heat exchange with the water (6) that feeds the heat recovery unit (5) of the cogeneration unit (A).

## Patentansprüche

1. Verfahren zum Erzeugen von Energie, von Wärme und von Wasserdampf, das:
- eine Einheit (A) zum gleichzeitigen Erzeugen mehrerer Energiearten, die eine Gasturbine (1) und eine Wärmerückgewinnungseinheit (5) enthält, und
- eine Dampferzeugungseinheit (B),
verwendet und das enthält:
- Erzeugen von Energie (3) und von Verbrennungsgas (4) durch die Gasturbine (1),
- Versorgen der Wärmerückgewinnungseinheit (5) mit Wasser (6),
- Erhitzen des Wassers (6) durch die Verbrennungsgase (4) der Gasturbine (1) in der Wärmerückgewinnungseinheit (5),
- Erhitzen des Wassers (12) durch Verbrennung eines Brennstoffs (11) und von Luft (10) in der Dampferzeugungseinheit (B),
und **dadurch gekennzeichnet, dass** es ein Vorerhitzen der Luft (10) enthält, das wenigstens teilweise durch Wärmeaustausch mit dem Wasser (6) erfolgt, mit dem die Wärmerückgewinnungseinheit (5) der Einheit (A) zur gleichzeitigen Erzeugung mehrerer Energiearten versorgt wird.

2. Verfahren nach dem vorhergehenden Anspruch, **dadurch gekennzeichnet, dass** die Temperatur des Wassers (6) der Wärmerückgewinnungseinheit (5) der Einheit (A) zur gleichzeitigen Erzeugung mehrerer Energiearten um wenigstens 20 °C höher ist als jene der Luft (10) der Dampferzeugungseinheit (B), die vorerhitzt werden soll.

3. Verfahren nach Anspruch 1 oder 2, **dadurch gekennzeichnet, dass** die Temperatur des Wassers (6) der Wärmerückgewinnungseinheit (5) der Einheit (A) zur gleichzeitigen Erzeugung mehrerer Energiearten um wenigstens 30 °C höher ist als jene der Luft (10) der Dampferzeugungseinheit (B), die vorerhitzt werden soll.

4. Verfahren nach einem der vorhergehenden Ansprüche, **dadurch gekennzeichnet, dass** das Wasser (6), mit dem die Wärmerückgewinnungseinheit (5) versorgt wird, durch den Wasserdampf (15) erhitzt wird.

5. Verfahren nach dem vorhergehenden Anspruch, **dadurch gekennzeichnet, dass** das Wasser (6), mit dem die Wärmerückgewinnungseinheit versorgt wird, durch den Wasserdampf (15) erhitzt wird, der von dem Wasserdampf (13, 8) abgezweigt wird, der durch die Dampferzeugungseinheit (B) und/oder durch die Wärmerückgewinnungseinheit (5) der Einheit (A) zur Erzeugung mehrerer nutzbarer Energiearten erzeugt wird.

6. Verfahren nach Anspruch 4 oder 5, **dadurch gekennzeichnet, dass** das Wasser (6), das die Wärmerückgewinnungseinheit (5) versorgt, durch den Wasserdampf (15) mittels eines Entgasers (14) erhitzt wird.

7. Verfahren nach einem der vorhergehenden Ansprüche, **dadurch gekennzeichnet, dass** die Luft (10), mit dem der Kessel (9) der Dampferzeugungseinheit (B) versorgt wird, zum Teil durch Wärmeaustausch mit dem Dampf (17), der durch die Dampferzeugungseinheit (B) und/oder durch die Wärmerückgewinnungseinheit (5) der Einheit (A) zur gleichzeitigen Erzeugung mehrerer Energiearten erzeugt wird, erhitzt wird.

8. Verfahren nach Anspruch 7, **dadurch gekennzeichnet, dass** das Erhitzen der Luft (10), mit der der Kessel (9) der Dampferzeugungseinheit (B) versorgt wird, durch den Dampf ausgeführt wird, nachdem die Luft (10) der Dampferzeugungseinheit (B) durch Wärmeaustausch mit dem Wasser (6), mit dem die Wärmerückgewinnungseinheit (5) der Einheit (A) zur gleichzeitigen Erzeugung mehrerer Energiearten versorgt wird, vorerhitzt worden ist.
